# EUROPEAN PATENT SPECIFICATION

(11) **EP 2 574 533 B1**
(45) Date of publication and mention of the grant of the patent: **08.07.2015**
(21) Application number: 12183583.9
(22) Date of filing: 07.09.2012
(51) Int. Cl.: B62K 11/04, B62K 19/10, B62K 19/20

(54) **Motorcycle frame**
Motorradrahmen
Cadre de motocyclette

(30) Priority: 29.09.2011 TW 100135206
(43) Date of publication of application: 03.04.2013
(73) Proprietor: Kwang Yang Motor Co., Ltd., Kaohsiung (TW)
(72) Inventor: Ko, Shih-Chih, Kaohsiung, (TW)
(74) Representative: Becker Kurig Straus

(56) References cited:
- EP-A1- 2 361 825
- CN-A- 101 708 752
- JP-A- H03 104 793
- TW-A- 200 804 128
- TW-U- M 394 279
- US-A- 5 183 130

## Description

### 1. Field of the Invention

The present invention relates to a motorcycle frame, and more particularly to a motorcycle frame having an excellent rigidity and a compact structure.

### 2. Description of Related Art

A conventional motorcycle has a motorcycle frame. An engine, a fuel tank, a handle, a front wheel, a rear wheel and electronic parts are mounted on the motorcycle frame. The design of the motorcycle frame needs to consider rigidity, length and a steering of the motorcycle frame.

TW 200804128A discloses a motorcycle frame including a head tube, a front frame, two rear frames, a structural tube, two front suspension arms and two rear suspension arms.

With reference to the China invention patent application, publication number CN1217273A, a motorcycle frame as shown in Fig. 5 has a front tube 50, a front body 51, two rear bodies 52, a bracket 53 and a pivot board 54. The front body 51 has a front end and a rear end. The front tube 50 is securely mounted on the front end of the front body 51. The rear bodies 52 are securely mounted on the rear end of the front body 51. Each rear body 52 extends upwardly toward a rear side of the motorcycle frame. The bracket 53 and the pivot board 54 are securely mounted on the front body 51 and are capable of connecting with an engine. Because the engine is mounted to an underside of the motorcycle frame, the engine does not occupy an inner space of the motorcycle frame, and the length of the motorcycle frame is short such that the motorcycle frame is easily steered. However, the front body 51 of the motorcycle frame is a single tube, is not rigid and is easily deformed when it is hit with an external force, even in a minor collision.

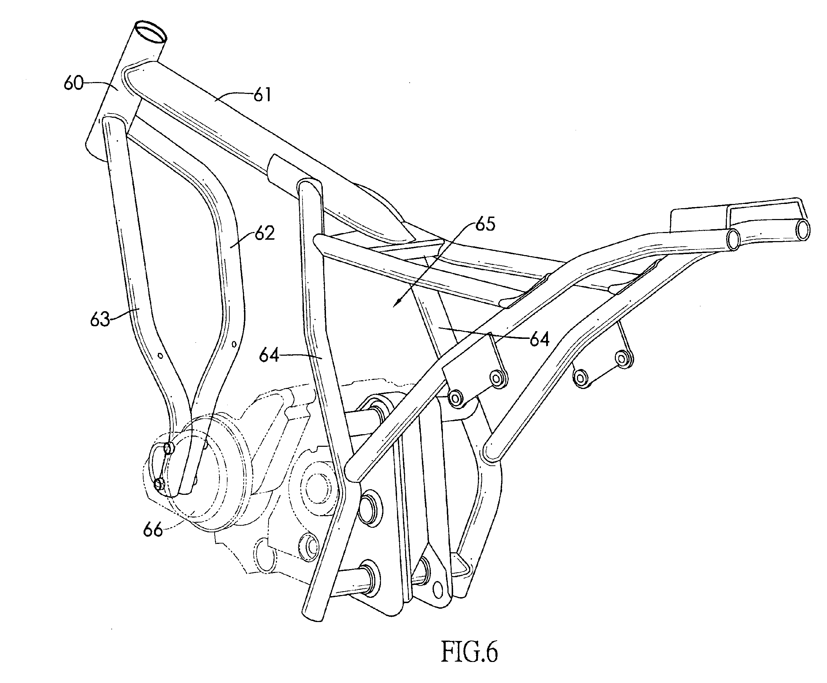

With reference to the Taiwan utility model patent, patent number M394279, a motorcycle frame according to the preamble of claim 1 is known. As shown in Fig. 6 said motorcycle frame has a steering tube 60, an upper tube 61, a first engine tube 62, a second engine tube 63, two middle engine tubes 64 and a rigid triangular structure 65. The upper tube 61 is securely connected with the steering tube 60. The first engine tube 62 and the second engine tube 63 are located below the upper tube 61 and are securely connected with the steering tube 60. Bottom ends of the first engine tube 62 and the second engine tube 63 are connected with each other. The middle engine tubes 64 are located behind the upper tube 61 and respectively have a bottom end. An engine 66 may be securely mounted on the bottom ends of the first engine tube 62, the second engine tube 63 and the middle engine tubes 64. Accordingly, a front rigid structure is formed between the engine 66, the first engine tube 62, the second engine tube 63 and the middle engine tubes 64. The rigid triangular structure 65 is formed on the middle engine tubes 64. With the front rigid structure and the rigid triangular structure 65, the motorcycle frame has a good structural strength and is rigid.

However, a distance between the bottom ends of the first engine tube 62, the second engine tube 63 and the middle engine tubes 64 has to be long enough to hold the bulky engine 66. Consequently, the length of the motorcycle frame is long, is not easily steered and cannot be applied to a small motorcycle.

To overcome the shortcomings, the present invention tends to provide a motorcycle frame to mitigate the aforementioned problems.

The main objective of the invention is to provide a motorcycle frame having an excellent rigidity and a compact structure.

A motorcycle frame has a main tube, two supporting tubes and two auxiliary tubes. The main tube has a main body, a head tube and a connecting tube. The head tube and the connecting tube are respectively mounted on two opposite ends of the main tube. The supporting tubes are located below the main tube and each has an upper segment and a lower segment. An engine mounting space is formed below the two lower segments. The auxiliary tubes are respectively located at two opposite sides of the main tube and are connected to the connecting tube. A first rigid structure is formed at where the main tube, the supporting tubes and the auxiliary tubes surround. The main body has a horizontal segment and an inclined segment. The horizontal segment has a distal end on which the head tube is securely mounted, and the upper segments are mounted on the horizontal segment. The inclined segment is securely connected to the horizontal segment, curves downward relative to the horizontal segment and has a distal end on which the connecting tube is securely mounted.Accordingly, the motorcycle frame has an excellent rigidity and a compact structure.

Other objects, advantages and novel features of the invention will become more apparent from the following detailed description when taken in conjunction with the accompanying drawings.

### IN THE DRAWINGS

Fig. 1 is a perspective view of a motorcycle frame in accordance with the present invention;
Fig. 2 is a side view of the motorcycle frame in Fig. 1;
Fig. 3 is an operational side view of the motorcycle frame in Fig. 2 showing an engine mounted on the motorcycle frame;
Fig. 4 is an operational side view of the motorcycle frame in Fig. 1 showing the motorcycle frame assembled with motorcycle parts to become a motorcycle;

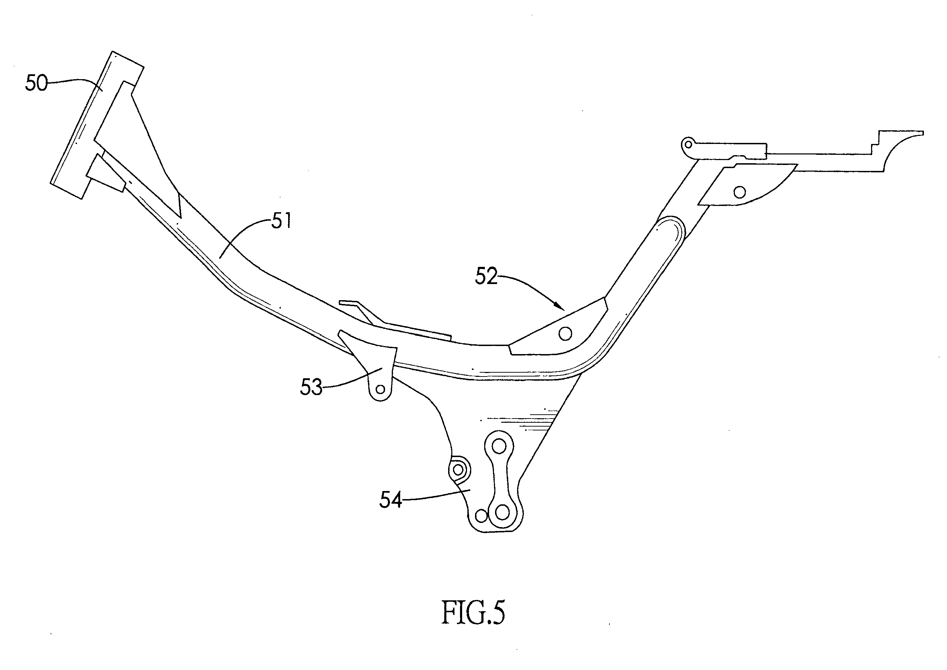

Fig. 5 is a side view of a conventional motorcycle frame in the China CN1217273A Patent application; and
Fig. 6 is a perspective view of another motorcycle frame in the Taiwan M394279 Utility Model.

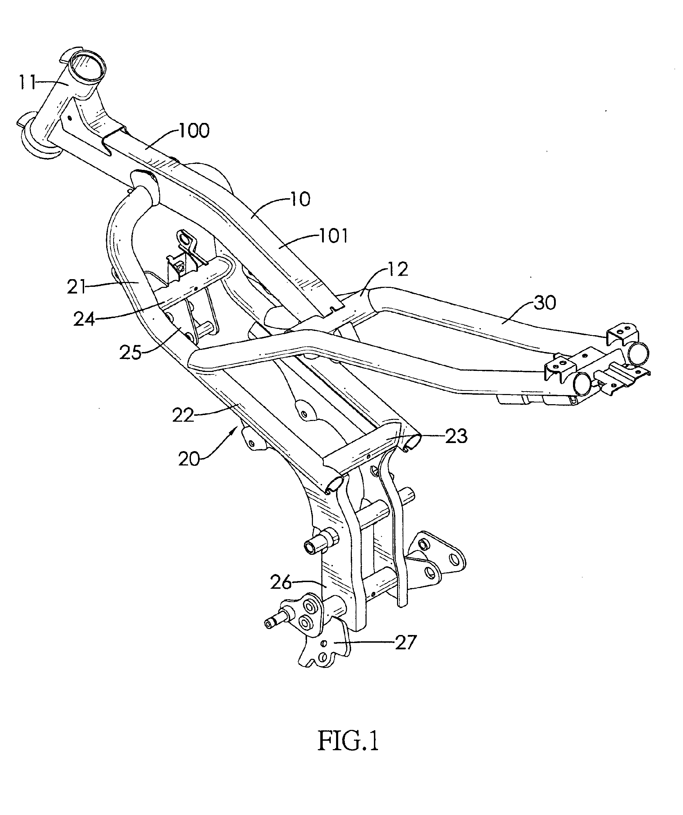

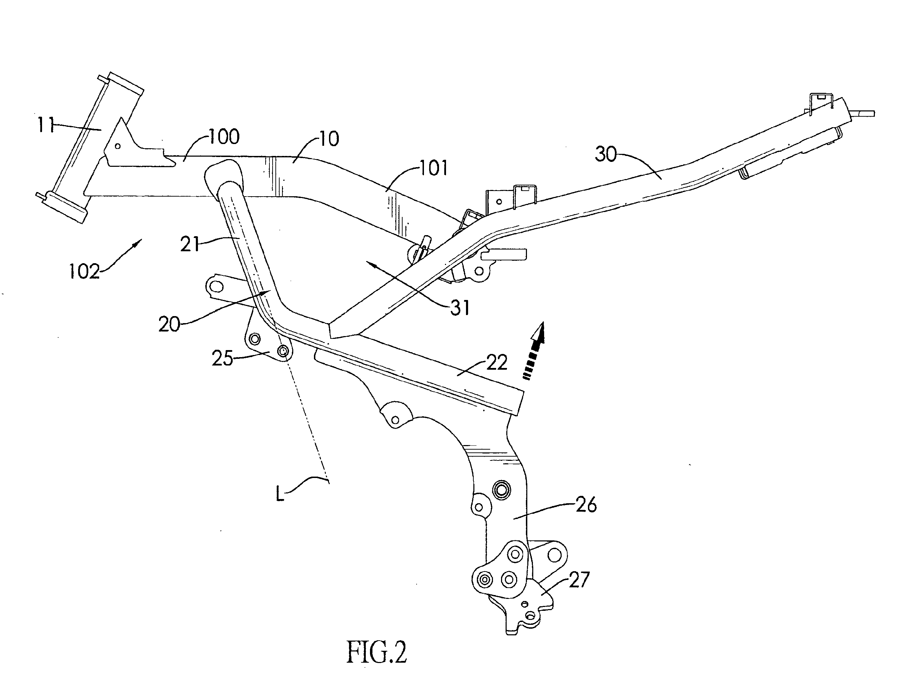

With reference to Figs. 1 and 2, a motorcycle frame in accordance with the present invention comprises a main tube 10, two supporting tubes 20 and two auxiliary tubes 30.

The main tube 10 has a main body, a head tube 11 and a connecting tube 12. The main body has a cross section, two opposite sides, two opposite ends and an outer surface. The cross section of the main body is rectangular. The head tube 11 is hollow. Preferably, the main body has a horizontal segment 100 and an inclined segment 101. The horizontal segment 100 has a distal end on which the head tube 11 is securely mounted. The inclined segment 101 is securely connected to the horizontal segment 100, curves downward relative to the horizontal segment 100 and has a distal end.

The connecting tube 12 extends laterally and has two opposite ends. The head tube 11 and the connecting tube 12 are respectively and securely mounted on the ends of the main body. Preferably, the distal end of the inclined segment 101 is securely mounted on the connecting tube 12.

The supporting tubes 20 are curved and are located below the main body of the main tube 10. Each supporting tube 20 has an upper segment 21 and a lower segment 22. The upper segment 21 of each supporting tube 20 has a distal end and an axis L. The distal ends of the two upper segments 21 are securely mounted on the outer surface respectively at the two opposite sides of the main body of the main tube 10. Preferably, the distal ends of the upper segments 21 are mounted on the horizontal segment 100 of the main body.

An open encompassing space 102 is formed below the horizontal segment 100 and is formed in front of the upper segments 21.

The lower segment 22 of each supporting tube 20 is connected to the upper segment 21 of the supporting tube 20, curves upward relative to the axis L of the upper segment 21 of the supporting tube 20 and has a distal end. An angle is formed between each lower segment 22 and a corresponding one of the upper segments 21.

An engine mounting space is formed below the two lower segments 22.

Preferably, a connecting rod 23 is securely mounted between and on the distal ends of the two lower segments 22. An enhancing strut 24 is securely mounted between and on the upper segments 21. A bracket 25 is securely mounted on the enhancing strut 24. Two braces 26 are respectively and securely mounted on the lower segments 22 and are located below the lower segments 22.

A mount 27 is securely mounted on the braces 26 with a pin section. Preferably, multiple pin sections are mounted between the braces 26, and the mount 27 is mounted on one of the pin sections.

The auxiliary tubes 30 are respectively located at the two opposite sides of the main body of the main tube 10, and are respectively and securely connected to the two opposite ends of the connecting tube 12. Each auxiliary tube 30 has a first end and a second end. The second end of each auxiliary tube 30 is opposite to the first end of the auxiliary tube 30, is located behind the main tube 10 and is located above the supporting tubes 20. The first ends of the two auxiliary tubes 30 are respectively and securely mounted on the two supporting tubes 20. The second ends of the auxiliary tubes 30 are securely connected with each other.

A first rigid structure is formed at where the main tube 10, the upper segments 21 of the supporting tubes 20 and the auxiliary tubes 30 surround, and has a receiving space 31 formed through the first rigid structure. A second rigid structure is formed at where the supporting tubes 20, the connecting rod 23 and the enhancing strut 24 surround.

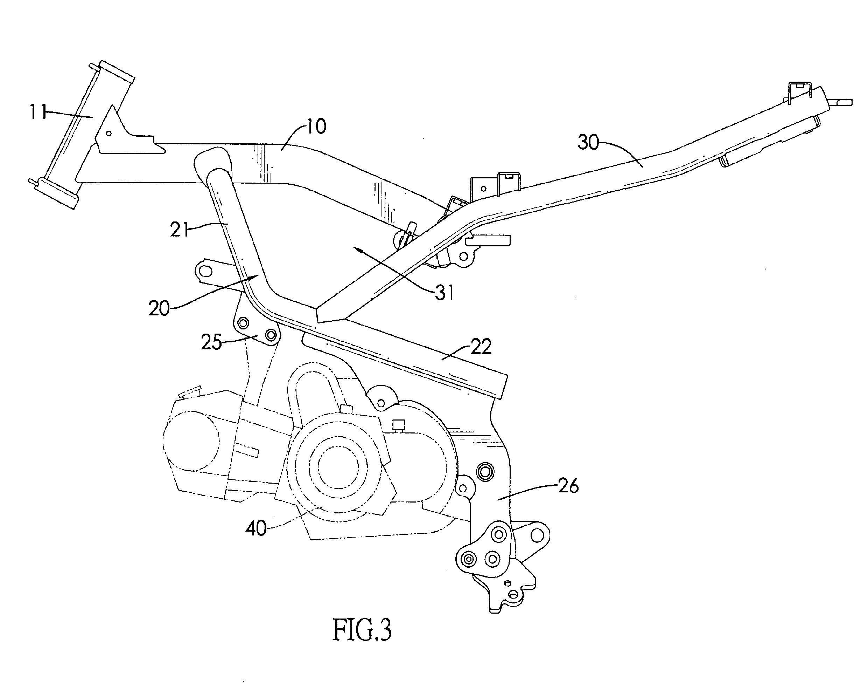

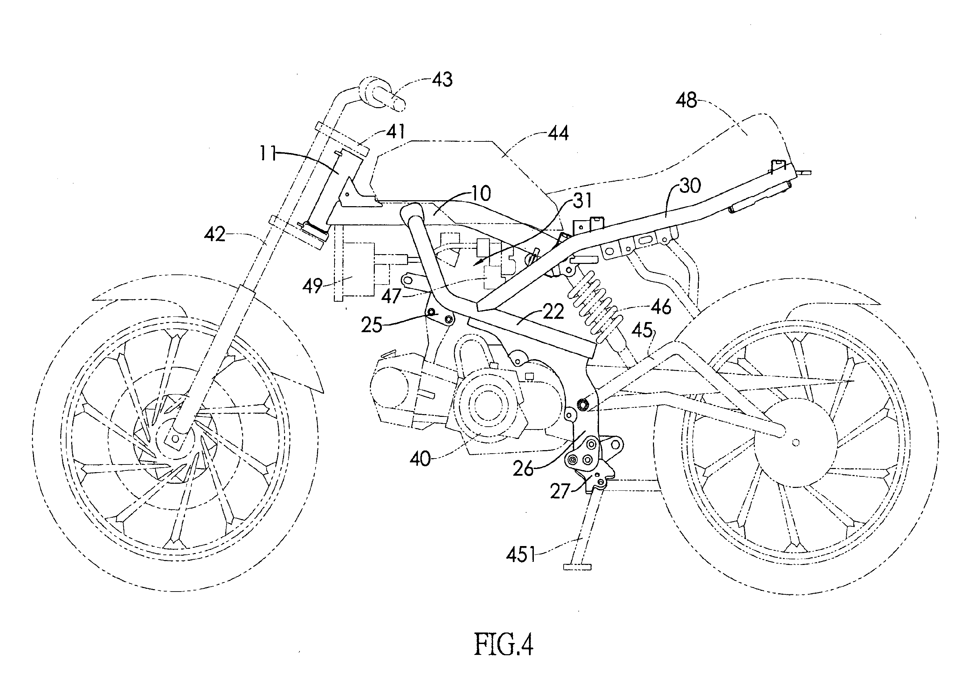

With reference to Figs. 3 and 4, the motorcycle frame in accordance with the present invention is assembled with motorcycle parts to become a motorcycle.

An engine 40 is mounted in the engine mounting space and has two ends. One of the ends of the engine 40 is securely connected to the bracket 25, and the other end of the engine 40 is securely connected to the braces 26. A triangular prop 41 is rotatably mounted through the head tube 11 and is connected with a front fork 42 and a handle 43. A front wheel and a front suspension device are connected with the front fork 42. A fuel tank 44 is mounted on the main tube 10. A rear arm 45 is connected with a rear wheel and is rotatably mounted on the pin sections of the braces 26. A suspension 46 has two ends. One of the ends of the suspension 46 is connected to the connecting tube 12, and the other end of the suspension 46 is connected to the rear arm 45. A side stand 451 is pivotally mounted on the mount 27. Electronic parts 47 are mounted in the receiving space 31.

A seat 48 is mounted on the auxiliary tubes 30. An air filter 49 is hung at the horizontal segment 100 and is located in the encompassing space 102.

From the above description, it is noted that the present invention has the following advantages:
1. Excellent rigidity:
   With the first rigid structure and the second rigid structure, the motorcycle frame in accordance with the present invention has excellent structural strength and rigidity.
2. Compact structure:
   Because the engine mounting space has been changed to a position below the two lower segments 22 and can mount the engine 40 therein, the motorcycle frame in accordance with the present invention does not have to create an extra space for the engine 40. Accordingly, the length of the motorcycle frame is reduced and the structure of the motorcycle frame is compact. With the compact motorcycle frame, the motorcycle frame is easily steered.
3. Good receiving ability:
   With the receiving space 31, the motorcycle frame can receive the electronic parts 47. Furthermore, the encompassing space 102 allows the motorcycle frame to mount the air filter 49 therein. With the receiving space 31 and the encompassing space 102, the motorcycle frame in accordance with the present invention has a good receiving ability.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A motorcycle frame, comprising:
a main tube (10) having
a main body having
two opposite sides; ; and
an outer surface;
a head tube (11); and
a connecting tube (12) extending laterally and having two opposite ends, wherein the head tube (11) and the connecting tube (12) are respectively and securely mounted on the ends of the main body;
two curved supporting tubes (20) located below the main body, each supporting tube (20) having
an upper segment (21) having a distal end and an axis (L),
wherein the distal ends of the two upper segments (21) are securely mounted on the outer surface respectively at the two opposite sides of the main body; and
a lower segment (22) connected to the upper segment (21) and curving upward relative to the axis (L) of the upper segment (21), wherein an engine mounting space is formed below the two lower segments (22);
two auxiliary tubes (30) respectively located at the two opposite sides of the main body, respectively and securely connected to the two opposite ends of the connecting tube (12), each auxiliary tube (30) having a first end, wherein the first ends of the two auxiliary tubes (30) are respectively and securely mounted on the two supporting tubes (20); and
a first rigid structure formed at where the main tube (10), the supporting tubes (20), the connecting tube (12), and the auxiliary tubes (30) surround, and having a receiving space (31) formed through the first rigid structure
wherein the main body comprises an inclined segment (101), and the motorcycle frame being **characterized in that**
the main body has
a horizontal segment (100) having a distal end on which the head tube (11) is securely mounted, wherein the upper segments (21) are mounted on the horizontal segment (100); and
an inclined segment (101) securely connected to the horizontal segment (100), curving downward relative to the horizontal segment (100) and has a distal end on which the connecting tube (12) is securely mounted.

2. The motorcycle frame as claimed in claim 1, wherein
an open encompassing space (102) is formed below the horizontal segment (100) and is formed in front of the upper segments (21).

3. The motorcycle frame as claimed in any one of claims 1 to 2, wherein each lower segment (22) has a distal end; and
a connecting rod (23) is securely mounted between and on the distal ends of the two lower segments (22).

4. The motorcycle frame as claimed in claim 3, wherein
an enhancing strut (24) is securely mounted between and on the upper segments (21); and
a second rigid structure is formed at where the supporting tubes (20), the enhancing strut (24), and the connecting rod (23) surround.

5. The motorcycle frame as claimed in claim 4, wherein
a bracket (25) is securely mounted on the enhancing strut (24); and two braces (26) are respectively and securely mounted on the lower segments (22) and are located below the lower segments (22), wherein the bracket (25) and the braces (26) are capable of mounting an engine (40).

6. The motorcycle frame as claimed in claim 5, wherein
a mount (27) is securely mounted on the braces (26) and is capable of mounting a side stand (451).

## Patentansprüche

1. Motorradrahmen, umfassend:
ein Hauptrohr (10) mit
einem Hauptkörper mit
zwei gegenüberliegenden Seiten; und
einer Außenfläche;
ein Steuerrohr (11); und
ein Verbindungsrohr (12), das sich seitlich erstreckt und zwei gegenüberliegende Enden aufweist, wobei das Steuerrohr (11) und das Verbindungsrohr (12) jeweils sicher an den Enden des Hauptkörpers befestigt sind;
zwei gekrümmte Stützrohre (20), die sich unterhalb des Hauptkörpers befinden, wobei jedes Stützrohr (20) aufweist
ein oberes Segment (21) mit einem entfernten Ende und einer Achse (L), wobei die entfernten Enden der zwei oberen Segmente (21) sicher an der Außenfläche jeweils an den zwei gegenüberliegenden Seiten des Hauptkörpers befestigt sind; und
ein unteres Segment (22), das mit dem oberen Segment (21) verbunden ist und das sich relativ zu der Achse (L) des oberen Segments (21) nach oben krümmt, wobei ein Motorbefestigungsraum unterhalb der zwei unteren Segmente (22) gebildet ist;
zwei Hilfsrohre (30), die sich jeweils an den zwei gegenüberliegenden Seiten des Hauptkörpers befinden, jeweils und sicher an den zwei gegenüberliegenden Enden des Verbindungsrohrs (12) befestigt sind, wobei jedes Hilfsrohr (30) ein erstes Ende aufweist, wobei die erste Enden der zwei Hilfsrohre (30) jeweils und sicher an den zwei Stützrohren (20) befestig sind; und
eine erste starre Struktur, die dort gebildet ist, wo der Hauptkörper (10), die Stützrohre (20), das Verbindungsrohr (12) und die Hilfsrohre (30) umgeben sind, und aufweisend einen Aufnahmeraum (31), der durch die erste starre Struktur gebildet ist,
wobei der Hauptkörper ein geneigtes Segment (101) umfasst und der Motorradrahmen **dadurch gekennzeichnet ist, dass**
der Hauptkörper aufweist
ein horizontales Segment (100) mit einem entfernten Ende an dem das Steuerrohr (11) sicher befestigt ist, wobei die oberen Segmente (21) an dem horizontalen Segment (100) befestigt sind; und
ein geneigtes Segment (101), das sicher mit dem horizontalen Segment (100) verbunden ist, relativ zu dem horizontalen Segment (100) nach unten gekrümmt ist und das ein entferntes Ende aufweist, an dem das Verbindungsrohr (12) sicher befestigt ist.

2. Motorradrahmen gemäß Anspruch 1, wobei
ein offener einschließender Raum (102) unterhalb des horizontalen Segments (100) und vor dem oberen Segment (21) gebildet ist.

3. Motorradrahmen gemäß Anspruch 1 oder 2, wobei
jedes untere Segment (22) ein entferntes Ende aufweist; und
ein Verbindungsstab (23) sicher zwischen und an den entfernten Enden der zwei unteren Segmente (22) befestigt ist.

4. Motorradrahmen gemäß Anspruch 3, wobei
eine erweiternde Stütze (24) sicher zwischen und an den oberen Segmenten (21) befestigt ist; und
eine zweite starre Struktur dort gebildet ist, wo die Stützrohre (20), die erweiternde Stütze (24) und der Verbindungsstab (23) umgeben sind.

5. Motorradrahmen gemäß Anspruch 4, wobei
eine Halterung (25) sicher an der erweiternden Stütze (24) befestigt ist; und
zwei Streben (26) jeweils und sicher an den unteren Segmenten (22) befestigt sind und sich unterhalb der unteren Segmente (22) befinden, wobei die Halterung (25) und die Streben (26) in der Lage sind einen Motor (40) zu befestigen.

6. Motorradrahmen gemäß Anspruch 5, wobei
eine Befestigung (27) sicher an den Streben (26) befestigt ist und in der Lage ist einen Seitenständer (451) zu befestigen.

## Revendications

1. Châssis de motocyclette, comprenant :
un tube principal (10) ayant
un corps principal ayant
deux côtés opposés ; et
une surface extérieure ;
un tube de tête (11) ; et
un tube de raccordement (12) s'étendant latéralement et ayant deux extrémités opposées, dans lequel le tube de tête (11) et le tube de raccordement (12) sont montés respectivement et de manière sécurisée sur les extrémités du corps principal ;
deux tubes de soutien incurvés (20) situés au-dessous du corps principal, chaque tube de soutien (20) ayant
un segment supérieur (21) ayant une extrémité distale et un axe (L), dans lequel les extrémités distales des deux segments supérieurs (21) sont montés de manière sécurisée sur la surface extérieure respectivement au niveau des deux côtés opposés du corps principal ; et
un segment inférieur (22) raccordé au segment supérieur (21) et s'incurvant vers le haut par rapport à l'axe (L) du segment supérieur (21), dans lequel un espace de montage de moteur est formé au-dessous des deux segments inférieurs (22) ;
deux tubes auxiliaires (30) situés respectivement au niveau des deux côtés opposés du corps principal, raccordés respectivement et de manière sécurisée aux deux extrémités opposées du tube de raccordement (12),
chaque tube auxiliaire (30) ayant une première extrémité, dans lequel les premières extrémités des deux tubes auxiliaires (30) sont montés respectivement et de manière sécurisée sur les deux tubes de soutien (20) ; et
une première structure rigide formée à l'emplacement entourant le tube principal (10), les tubes de soutien (20), le tube de raccordement (12) et les tubes auxiliaires (30) et comportant un espace de réception (31) formé à travers la première structure rigide,
dans lequel le corps principal comprend un segment incliné (101) et le châssis de motocyclette étant **caractérisé en ce que**
le corps principal possède
un segment horizontal (100) ayant une extrémité distale sur laquelle le tube de tête (11) est monté de manière sécurisée, dans lequel les segments supérieurs (21) sont montés sur le segment horizontal (100) ; et
un segment incliné (101) raccordé de manière sécurisée au segment horizontal (100), s'incurvant vers le bas par rapport au segment horizontal (100) et comporte une extrémité distale sur laquelle le tube de raccordement (12) est monté de manière sécurisée.

2. Châssis de motocyclette selon la revendication 1, dans lequel
un espace englobant ouvert (102) est formé au-dessous du segment horizontal (100) et est formé à l'avant des segment supérieurs (21).

3. Châssis de motocyclette selon une quelconque des revendications 1 à 2, dans lequel :
chaque segment inférieur (22) comporte une extrémité distale ; et
une tige de raccordement (23) est montée de manière sécurisée entre et sur les extrémités distales des deux segments inférieurs (22).

4. Châssis de motocyclette selon la revendication 3, dans lequel :
une entretoise d'amélioration (24) est montée de manière sécurisée entre et sur les segments supérieurs (21) ; et
une seconde structure rigide est formée à l'emplacement entourant les tubes de soutien (20),
l'entretoise d'amélioration (24) et la tige de raccordement (23).

5. Châssis de motocyclette selon la revendication 4, dans lequel :
un support (25) est monté de manière sécurisée sur l'entretoise d'amélioration (24) ; et
deux barres de retenue (26) sont montées respectivement et de manière sécurisée sur les segments inférieurs (22) et sont situés au-dessous des segments inférieurs (22), dans lequel le support (25) et les barres de retenue (26) sont aptes au montage d'un moteur (40).

6. Châssis de motocyclette selon la revendication 5, dans lequel :
une monture (27) est fixée de manière sécurisée sur les barres de retenue (26) et est apte au montage d'une béquille latérale (451).
